# EUROPÄISCHE PATENTANMELDUNG

(11) **EP 2 141 001 A2**
(43) Veröffentlichungstag der Anmeldung: **06.01.2010**
(21) Anmeldenummer: 09008108.4
(22) Anmeldetag: 20.06.2009
(51) Int. Cl.: B29C 65/20

(54) **Vorrichtung für das Verschweissen von Kunststoffprofilstäben**

(30) Priorität: 01.07.2008 DE 202008008631 U
(71) Anmelder: Urban GmbH & Co. Maschinenbau KG, 87700 Memmingen (DE)
(72) Erfinder: Hiebeler, Stefan, 87463 Dietmannsried (DE)
(74) Vertreter: Schulz, Manfred

(57) **Zusammenfassung**

Die Erfindung betrifft eine Vorrichtung für das Verschweißen von Kunststoffprofilstäben, zum Beispiel zu Tür- oder Fensterrahmen oder deren Teile, wobei je ein Tisch für die zu verschweißenden Profilstäbe vorgesehen ist, die Tische zueinander bewegbar sind und der Bewegungsweg der Tische aufeinanderzu durch einen Anschlag begrenzbar ist, der mit einer Anschlagfläche zusammenwirkt, die an einem ersten Tisch angeordnet ist.

Die Erfindung zeichnet sich dadurch aus, dass ein Anschlagelement vorgesehen ist, das zumindest eine Ausnehmung aufweist, an welcher sich ein Anschlagbereich anschließt und das Anschlagelement zumindest in zwei Positionen derart positionierbar ist, dass in einer ersten Position die Ausnehmung zwischen Anschlag und Anschlagfläche positionierbar ist und in einer zweiten Position der Anschlagbereich zwischen Anschlag und Anschlagfläche positionierbar ist.

## Beschreibung

Die Erfindung betrifft eine Vorrichtung für das Verschweißen von Kunststoffprofilstäben, zum Beispiel für Tür- oder Fensterrahmen oder deren Teile, wobei je ein Tisch für die zu verschweißenden Profilstäbe vorgesehen ist, die Tische zueinander bewegbar sind und der Bewegungsweg der Tische aufeinanderzu durch einen Anschlag begrenzbar ist, der mit einer Anschlagfläche zusammenwirkt, die an einem ersten Tisch angeordnet ist.

Der Einsatz von vorgenannten Vorrichtungen für das Verschweißen von Kunststoffprofilstäben zur Herstellung von Tür- oder Fensterrahmen ist hinlänglich bekannt. Mit Hilfe der vorgenannten Vorrichtungen wird zum Beispiel aus extrudierten Kunststoffprofilstäben der Flügelrahmen oder der Stockrahmen eines Tür- oder Fensterrahmens hergestellt. Die Erfindung umfasst dabei sowohl Anordnungen, bei welchen in einer Vorrichtung alle Ecken eines Rahmens verschweißt werden, wie auch Anwendungsfälle, bei welchen mit der Vorrichtung nur eine oder zwei Ecken verschweißt werden, also ein entsprechender Teil eines Türoder Fensterrahmens entsteht.

Die Kunststoffprofilstäbe werden dabei auf Länge und Gehrung (entsprechend dem Eckwinkel am Rahmen) abgelängt, in der Vorrichtung eingelegt und dann die Gehrungsfläche zum Beispiel mit einem Heizspiegel derart erwärmt, dass die erhitzten Gehrungsflächen miteinander zusammengefügt und verbunden werden. Dabei wird der Umstand ausgenützt, dass die Kunststoffprofile aus thermoplastischen Materialien bestehen.

Geschickterweise werden dabei die Kunststoffprofilstäbe in der Vorrichtung in geeigneter Weise fixiert und bewegt, wobei für die Bewegung mindestens ein bewegbarer Tisch vorgesehen ist. Zumindest ein Tisch ist auf einer Führung beweglich angeordnet und gegebenenfalls mit einem separaten Antrieb (zum Beispiel hydraulisch oder pneumatisch wirkende Arbeitszylinder oder ein entsprechender Elektromotor oder Ähnliches) ausgebildet. Der andere Tisch ist an der Vorrichtung feststehend oder auch in gleicher Weise wie der erste Tisch beweglich ausgebildet, also mit einer Führung und einem Antrieb ausgestattet.

Der Tisch besitzt eine entsprechende Fixier- oder Klemmeinheit für den Profilstab. Dadurch ist ein sicheres Transportieren beziehungsweise Positionieren der Stäbe gewährleistet.

Es ist bekannt, mit dem Einsatz von entsprechenden Anschlägen den Verfahrweg beziehungsweise Bewegungsweg der Tische aufeinanderzu zu begrenzen und so letztendlich den Herstellungsprozess des Tür- beziehungsweise Fensterrahmens zu beeinflussen und zu steuern. Wird eine entsprechende Wegbegrenzung eingesetzt, das heißt, läuft der Anschlag bei einem kürzeren Bewegungsweg auf die Anschlagfläche auf, so verbleibt letztendlich ein größerer Spalt beziehungsweise Verschweißbereich, der gegebenenfalls am fertigen Rahmen auch sichtbar ist, zwischen den beiden zu verschweißenden Profilstäben.

Wird eine entsprechende Begrenzung nicht vorgesehen, so werden die beiden Profilstäbe weiter zusammengefahren und der Nahtoder Spaltbereich zwischen den beiden Profilstäben entsprechend kleiner gestaltet.

Im Stand der Technik ist es bekannt, entsprechende Wegbegrenzungen separat im Bereich des Anschlages beziehungsweise der Anschlagfläche einzusetzen und nach Verwendung/bei Bedarf dort wieder zu entfernen. Eine solche Anordnung ist ausgesprochen aufwendig und umständlich.

Die Erfindung hat es sich daher zur Aufgabe gemacht, eine Vorrichtung wie eingangs beschrieben dahingehend zu verbessern, um in möglichst einfacher Weise eine Begrenzung des Bewegungsweges vorzusehen.

Gelöst wird diese Aufgabe durch eine Vorrichtung wie eingangs beschrieben, wobei erfindungsgemäß vorgeschlagen wird, dass ein Anschlagelement vorgesehen ist, das zumindest eine Ausnehmung aufweist, an welcher sich ein Anschlagbereich anschließt und das Anschlagelement zumindest in zwei Positionen derart positionierbar ist, dass in einer ersten Position die Ausnehmung zwischen Anschlag und Anschlagfläche positionierbar ist und in einer zweiten Position der Anschlagbereich zwischen Anschlag und Anschlagfläche positionierbar ist.

Durch den Einsatz eines Anschlagelementes, das bevorzugt einsatzbereit an der erfindungsgemäßen Vorrichtung angeordnet ist, wird eine Wegbegrenzung für den Bewegungsweg zur Verfügung gestellt. Durch das einfache Verstellen des Anschlagelementes zwischen bevorzugt mindestens zwei, aber gegebenenfalls auch mehr Positionen wird in einfacher Weise der Bewegungsweg der Tische aufeinanderzu verändert und somit der Herstellungsprozess auch in einfach gestalteten Vorrichtungen optimal beherrscht. Dabei wird ein Anschlagelement vorgeschlagen, das zumindest zwei verschiedene Eigenschaften besitzt, nämlich einen erste Bereich, einen Anschlagbereich aufweist, mit einer gewissen Materialdicke und einem zweiten Bereich besitzt mit einer Ausnehmung oder mit einer geringeren Materialdicke als im Anschlagbereich. Wird nun der Bereich mit der Ausnehmung eingesetzt, so resultiert letztendlich ein längerer Bewegungsweg der beiden Tische aufeinanderzu, das heißt, auch die von den Tischen oder der von dem einen Tisch transportierte Profilstab wird näher an den anderen Profilstab herantransportiert und an einem fertig verschweißten Rahmen verbleibt ein kleinerer Spalt.

Mit dem Einsatz des Anschlagbereiches und dem Anschlagelement resultiert ein, aufgrund der Materialdicke des Anschlagelementes, kürzerer Weg, der zu einem entsprechend größeren Spalt führt.

In diesem Zusammenhang sind auch entsprechende Quetschplatten oder Niederhalter über den Gehrungsbereichen vorgesehen, um das Herausquellen des thermoplastischen Kunststoffes während des Zusammenfügens (dem Schweißprozess) der Profilstäbe zu begrenzen. Bei entsprechender Bewegungswegbegrenzung wird ein möglichst optimales Schweißergebnis erreicht, ohne dass eine zusätzliche Nachbearbeitung der Schweißnaht notwendig ist. Um diesen Vorgang auch entsprechend zu beherrschen ist es günstig, in geeigneter Weise den Bewegungsweg des Tisches beziehungsweise der Tische zu beherrschen.

Es wird klarstellend bemerkt, dass die Definition "Ausnehmung" nicht grundsätzlich nur den Einsatz einer Materiallücke bedingt, sondern sehr wohl auch durch eine entsprechende Reduzierung der Materialdicke im Bereich der "Ausnehmung" der Anschlag auf dem Anschlagelement zu liegen kommt und diesen an die Anschlagfläche an den ersten Tisch drückt.

Für die Anordnung des Anschlages oder der Anschläge sind mehrere Varianten erfindungsgemäß vorgesehen. Zunächst ist es möglich, dass der Anschlag am zweiten Tisch vorgesehen ist, der erste Tisch trägt, wie bereits beschrieben, die Anschlagfläche, die mit dem Anschlag zusammenwirkt. Hierauf ist die Erfindung aber nicht begrenzt, in einer erfindungsgemäßen Variante ist vorgesehen, dass der Anschlag an einem, in dem Spalt zwischen den beiden Tischen anordenbaren Element, zum Beispiel einer Justierplatte oder einem Schweißspiegel vorgesehen ist.

Der Anschlag an dem zweiten Tisch wird dann eingesetzt, wenn die beiden Tische während des Fügevorganges, also dem tatsächlichen Verbinden der beiden Profilstäbe, zusammengefahren werden. In der davorliegenden Bearbeitung ist das Anwärmen der Gehrungsflächen mit dem Schweißspiegel vorgesehen. Damit auch der Schweißspiegel passgenau, und zwar zu beiden Tischen gleich beabstandet, zwischen diesen orientiert ist, ist in geeigneter Weise an dem Schweißspiegel, der Justierplatte (diese dient dem Einlegen beziehungsweise Einstellen der Stäbe oder Ähnlichem) oder allgemein an im Spalt positionierbaren Elementen ebenfalls ein Anschlag zugeordnet.

Die Erfindung umfasst daher sowohl die Lösung, bei welcher der Anschlag am zweiten Tisch, oder der Anschlag an einem in den Spalt zwischen den beiden Tischen positionierbaren Element angeordnet ist. Während des Herstellprozesses eines Fensterrahmens werden dabei gegebenenfalls beide Anschlagtypen eingesetzt, durch den erfindungsgemäßen Vorschlag dient der Einsatz des Anschlagelementes, welches zwischen zwei Positionen verstellbar ist, wahlweise beiden Anschlagtypen, um eine entsprechende Veränderung des verbleibenden Spaltes zu erreichen beziehungsweise einzustellen.

Dabei ist es erfindungsgemäß möglich, dass durchaus eine Mehrzahl von Anschlägen an der Vorrichtung vorgesehen sind, diese Anschläge verteilen sich dabei entlang der Tiefe des Tisches, also zum Beispiel entlang der Gehrungsfläche oder entlang des Spaltes zwischen den beiden Tischen.

Erfindungsgemäß ist vorgesehen, dass die Tische aufeinanderzu bewegbar sind. Diese Relativbewegung kann in grundsätzlich zwei verschiedenen Varianten erfolgen, nämlich derart, dass zumindest einer der beiden Tische (der erste oder der zweite Tisch) beweglich gelagert ist, was zu einem entsprechend geringeren Aufwand führt, da die gesamte Lagerung und auch der Antrieb des Tisches nur einfach auszuführen ist. Die Erfindung ist in gleicher Weise aber auch bei erfindungsgemäßen Vorrichtungen einsetzbar, bei welchen beide Tische beweglich gelagert sind.

Dabei ist ein entsprechender Tisch dann schlittenartig ausgebildet, er trägt die Fixier- oder Klemmeinheit für den Profilstab, der schlittenartige Tisch ist dann auf einer Führung längsbeweglich geführt und durch entsprechende Antriebe bewegt.

Kinematisch gleichwirkend ist dabei eine Anordnung, bei welcher der Anschlag oder die Anschlagfläche an einem beweglichen Tisch angeordnet ist. Gegebenenfalls befindet sich dann die Anschlagfläche oder der Anschlag an dem festgelegten Tisch.

Der Anschlag besitzt eine Anschlagkopffläche, die eigentlich mit der Anschlagfläche zusammenwirkt. Für Einstell- beziehungsweise Justierzwecke der gesamten Vorrichtung ist es in einer erfindungsgemäßen Variante vorgesehen, dass eine Einstellvorrichtung für die Lage der Anschlagkopffläche vorgesehen ist. Grundsätzlich ist Gleiches natürlich auch mit der Anschlagfläche möglich, das heißt, in einer erfindungsgemäßen Variante wird auch eine Einstellvorrichtung für die Lage der Anschlagfläche angeboten.

Geschickterweise ist vorgesehen, dass das Anschlagelement im Spalt zwischen den beiden Tischen angeordnet ist. Hieraus resultiert, dass auch die Anordnung des Anschlages beziehungsweise der Anschlagfläche ebenfalls im Spalt vorgesehen ist und daher die Einstellung des Spaltes relativ nah am zu verschweißenden Profil erfolgt.

Günstigerweise ist das Anschlagelement längserstreckend im Spalt angeordnet. Da, wie bereits ausgeführt, unter Umständen eine Mehrzahl von Anschlägen im Spalt angeordnet sind, wird erfindungsgemäß ein verhältnismäßig langes, sich längs im Spalt erstreckendes Anschlagelement vorgeschlagen, durch welches es möglich ist, den Anschlägen, die sich ebenfalls im Spalt befinden, in gleicher Weise in zwei verschiedenen Positionen des Anschlagelementes die Ausnehmung oder den Anschlagbereich anzubieten. Der große Vorteil liegt insbesondere darin, dass in einer Verstellbewegung alle Anschläge bezüglich deren Begrenzung ansprechbar sind.

Günstigerweise ist daher das Anschlagelement als Anschlagleiste ausgebildet, wobei die Anschlagleiste zum Beispiel als Flachmaterial oder als L- beziehungsweise U-Profil oder Ähnliches ausgebildet ist. Dabei wird das Anschlagelement in geeigneter Weise an der Vorrichtung geführt und gehalten. Dies kann zum Beispiel in entsprechenden Rasterungen oder Klemmungen erfolgen, um ein versehentliches Verstellen des Anschlagelementes zu vermeiden.

Alternativ hierzu ist vorgesehen, dass das Anschlagelement als Anschlagscheibe ausgebildet ist und die Anschlagscheibe zum Beispiel rotierend in der Vorrichtung gelagert ist. Auch hier ist die Rotation festklemmbar.

Je nachdem, wie das Anschlagelement ausgebildet ist, wird zum Beispiel eine geradlinige Bewegung des Anschlagelementes zwischen den beiden Positionen eingesetzt. Das bedeutet, dass zwischen einer großen Spaltweite und einer kleinen Spaltweite durch eine gerade Bewegung des Anschlagelementes zwischen den beiden jeweiligen Positionen (Ausnehmung oder Anschlagbereich in Opposition zu Anschlag beziehungsweise Anschlagfläche) umgeschaltet wird. Dabei bietet sich eine geradlinige Bewegung, insbesondere bei einer längserstreckenden Ausgestaltung des Anschlagelementes, wie zum Beispiel einer Anschlagleiste, an.

Dahingegen ist erfindungsgemäß eine Rotationsbewegung des Anschlagelementes zwischen den beiden Positionen günstig, wenn zum Beispiel das Anschlagelement als Anschlagscheibe ausgebildet ist.

In einer erfindungsgemäßen Variante ist vorgesehen, dass das Anschlagelement aus mehreren Anschlagteilen besteht, wobei ein erstes Anschlagteil dem ersten und ein zweites Anschlagteil dem zweiten Tisch zugeordnet ist. Das führt dazu, dass die Anschlagteile zueinander beweglich sind, da diese ja mit dem jeweiligen bewegbaren Tisch mitbewegt werden. Eine solche Ausgestaltung erlaubt es aber auch, dass ein in dem Spalt zwischen den beiden Tischen angeordnetes Element, wie zum Beispiel eine Justierplatte oder ein Schweißspiegel oder ähnliches, bezüglich der fiktiven Mittelebene zwischen den beiden Tischen oder in der Mitte des Spaltes symmetrisch positionierbar ist, da links und rechts von dem jeweiligen Element ein (jeweils gleichartiges) Anschlagteil als Teil des Anschlagelementes vorgesehen ist. Dabei werden die beiden Anschlagteile in gleicher Weise zwischen den beiden Positionen hin- und herbewegt, also bei Bedarf der Anschlagbereich oder die Ausnehmung zwischen Anschlag und Anschlagfläche positioniert.

Geschickterweise wird vorgeschlagen, dass das Anschlagelement aus zwei Anschlagteilen, wie beschrieben, besteht. Hierauf ist die Erfindung aber nicht beschränkt. Es ist durchaus möglich, dass das Anschlagelement aus mehreren, also drei oder mehreren Anschlagteilen besteht.

Auch das einzelne Anschlagteil ist dabei, ähnlich wie vorbeschrieben das Anschlagelement, zum Beispiel als Leiste oder Scheibe ausgestaltet und entsprechend beweglich gelagert.

Dabei sind in geschickter Weise die Anschlagteile beziehungsweise auch die Anschlagleiste eines ein- oder mehrstückigen Anschlagelementes im Spalt angeordnet und wirken dort in geeigneter Weise mit den Anschlägen beziehungsweise Anschlagsflächen zusammen.

In einer bevorzugten Ausgestaltung der Erfindung ist vorgesehen, dass das Anschlagelement als installierte Einheit an der Vorrichtung vorgesehen ist. Als installierte Einheit ist das Anschlagelement jederzeit zum Einsatz bereit, das bedeutet, das Anschlagelement befindet sich im dauerhaften Einsatz, gegebenenfalls nur zur Benutzung seiner Ausnehmung (Lücke), wenn eben keine Verkürzung des Bewegungsweges benötigt wird oder durch Einsatz seines Anschlagbereiches, wenn eine entsprechende Verkürzung des Bewegungsweges (entspricht Vergrößerung des resultierenden Spaltes) benötigt wird. Dies grenzt sich somit ab von den Varianten, bei welchen ein Anschlagelement nur bei Bedarf in die Maschine eingelegt wird und dann hernach wieder entfernt wird, also gegenständlich aus der Vorrichtung entnommen wird.

Für die Verstellung des Anschlagelementes zwischen seinen zwei Positionen ist ein händischer oder motorischer Bewegungsantrieb vorgesehen. Der Einsatz eines händischen Bewegungsantriebes ist zum Beispiel bei einfach gestalteten Vorrichtungen kostengünstig realisierbar, wohingegen ein motorischer Bewegungsantrieb bei aufwendigen, durch entsprechende Steuerungen überwachte Vorrichtungen günstig ist. Damit ist klar, dass der erfindungsgemäße Vorschlag auch an verhältnismäßig einfachen Vorrichtungen beziehungsweise Schweißmaschinen Verwendung findet.

Für den Fall, dass eine händische Betätigung vorgesehen ist, ist ein Betätigungsknopf vorgesehen, welcher mit einem Antriebsgestänge beziehungsweise Antriebsgetriebe vorgesehen ist. Die tatsächliche Kraft zum Verstellen des Anschlagelementes zwischen den Positionen wird dabei von dem Bediener geleistet.

Natürlich wird in gleicher Weise ein Antriebsgestänge oder ein Antriebsgetriebe auch bei einem motorisch ausgebildeten Bewegungsantrieb vorgesehen. Gegebenenfalls wird dies dann auch durch ein Bowdenzug oder Änliches realisiert.

Dabei ist es sehr geschickt, dass das Antriebsgestänge oder das Antriebsgetriebe die Bewegung des Bewegungsantriebes auf die verschiedenen Anschlagsteile verteilt. Ein wesentlicher Vorzug der Erfindung ist dadurch realisiert, dass mit einer, sei diese händisch oder durch einen entsprechenden Antrieb unterstützt, ausgeführten Verstellbewegung, alle Anschläge bezüglich ihres Bewegungsweges gleichzeitig und gleichartig veränderbar sind, indem nämlich dann das Anschlagelement entsprechend von dem Anschlagbereich in dem Bereich der Ausnehmung positioniert wird oder umgekehrt.

Bevorzugterweise wird der Bewegungsantrieb, insbesondere der Betätigungsknopf an dem feststehenden Tisch oder dem, die Vorrichtung tragenden, Maschinenrahmen vorgesehen. Es ist nicht zwingend notwendig, den Bewegungsantrieb mit den mitfahrenden Vorrichtungsteilen, zum Beispiel dem mitfahrenden Tisch oder sonstigen Elementen auszugestalten, was zu entsprechendem Aufwand führt.

Wie bereits ausgeführt, werden erfindungsgemäß für die Ausnehmung verschiedene Ausgestaltungen vorgeschlagen. Zunächst ist vorgesehen, dass die Ausnehmung tatsächlich als Lücke in dem Anschlagselement ausgebildet ist. So ist dies zum Beispiel auch in den Figuren gezeigt. Bei einer solchen erfindungsgemäßen Variante wirkt der Anschlag bei aktivierter Ausnehmung (Ausnehmung ist in Position gebracht) gleichwohl direkt mit der Anschlagfläche des ersten Tisches unmittelbar zusammen. Hierauf ist aber die Erfindung in keinster Weise beschränkt. Die Erfindung umfasst auch die Lösung, bei welcher die Ausnehmung als Materialschwächung in dem Anschlagelement ausgebildet ist. Damit wird ebenfalls erreicht, dass der Bewegungsweg der Tische aufeinanderzu entsprechend beeinflusst wird. Dabei bildet natürlich eine Materialschwächung ebenfalls eine Ausnehmung, allerdings eine Ausnehmung, bei welcher der Anschlag durch die Ausnehmung mittelbar auf die Anschlagfläche, um die Materialschwächung verkürzten Bewegungsweg, wirkt.

Hiermit kinematisch gleichwirkend und von der Erfindung in gleicher Weise mit umfasst sind natürlich auch Lösungen, bei welchen die Materialdicke des Anschlagelementes entsprechend erhöht wird um entsprechende Auffütterungen und Ähnlichem. Auch dieser Vorschlag nützt den erfindungsgemäßen Gedanken.

Erfindungsgemäß ist des Weiteren auch vorgesehen, dass die Ausnehmung im Rand- oder Endbereich des Anschlagelementes angeordnet ist. Es ist daher ebenfalls ein Aspekt der Erfindung, dass die Lücke, also ein entsprechender Freiraum, im Rand- oder Endbereich des Anschlagelementes vorgesehen ist und erfindungsgemäß eingesetzt wird.

Dabei eröffnet die Erfindung natürlich die Möglichkeit, dass eine Vielzahl von verschieden ausgestalteten Anschlagbereichen beziehungsweise Ausnehmungen miteinander kombiniert werden, um zum Beispiel nicht nur zwischen zwei Positionen, sondern zwischen drei oder mehreren Positionen verändern zu können, wodurch der resultierende Spaltabstand zwischen den beiden Tischen in geringen Schritten veränderlich ist.

Dabei wird erfindungsgemäß vorgeschlagen, dass das Anschlagelement eine Mehrzahl von Ausnehmungen aufweist, wobei die Anzahl der Ausnehmungen beziehungsweise damit korrespondierend daneben angeordneten Anschlagbereichen deutlich größer sein kann wie die Anzahl der jeweils eingesetzten Anschläge. So ist es nach der Erfindung durchaus möglich, dass bei dem Einsatz einer Justierplatte eines Schweißspiegels oder eines anderen Elementes ein anderer Ort des Anschlages zur Verfügung gestellt wird, der dann in gleicher Weise durch das Anschlagelement zu bedienen ist, wie wenn die Elemente aus dem Spalt entfernt sind und die beiden Tische, zum Beispiel während des Füge- oder Schweißvorganges zusammenfahren und dann entsprechend andere Anschläge oder Anschlagflächen wirksam sind. Die Anzahl der Ausnehmungen ist daher im Hinblick auf die mögliche Anzahl von Anschlägen, die hiermit zusammenwirken stark variierbar. Da der Begriff "Ausnehmung" gemäß der Erfindung aber auch bezüglich der Materialdicke oder -schwächung sehr variabel definiert ist, ergibt sich auch bei einer verhältnismäßig geringen Anzahl von Anschlägen unter Umständen eine hohe Anzahl von Ausnehmungen, die gegebenenfalls nicht allein durch die verschiedenen Einsatzbereiche (Justierplatte oder Schweißvorgang) begründet sind. Wenn nämlich eine größere Anzahl von Einstellmöglichkeiten des Anschlagelementes erfindungsgemäß vorgesehen ist, so kann dies durch eine größere Anzahl von unterschiedlich dicken Ausnehmungen in gleicher Weise realisiert werden.

Des Weiteren umfasst die Erfindung nicht nur eine Vorrichtung wie eingangs beschrieben, sondern umfasst in gleicher Weise auch eine Schweißmaschine für das Verschweißen von zwei, bevorzugt winklig zueinander angeordneten beziehungsweise zu verschweißenden Profilstäben oder aus Profilstäben gebildete Rahmenteile, die mit einer Vorrichtung, wie beschrieben, ausgestattet sind.

Die Erfindung stellt ein einfaches Mittel, nämlich ein Anschlagelement, in verblüffend vielfältiger und einfach zu verwendender Weise zur Verfügung. Auch bei komplexen erfindungsgemäßen Vorrichtungen mit einer Vielzahl von Anschlägen wird unter Umständen mit einer einzigen Verstellbewegung die resultierende Spaltbreite für alle Anschläge gleichzeitig verändert. Dabei ist die Anordnung platzsparend realisiert und immer verfügbar, da in der Vorrichtung fest installiert.

Die Erfindung ist schematisch in der Zeichnung gezeigt. Es zeigen:
- Fig. 1: in einer dreidimensionalen Ansicht die erfindungsgemäße Vorrichtung;
- Fig. 2a, 2b: in einer dreidimensionalen Ansicht ein Detail der erfindungsgemäßen Vorrichtung in zwei verschiedenen Stellungen und
- Fig. 3a, 3b: in einer dreidimensionalen Ansicht je ein Detail der erfindungsge- mäßen Vorrichtung in zwei ver- schiedenen Positionen.

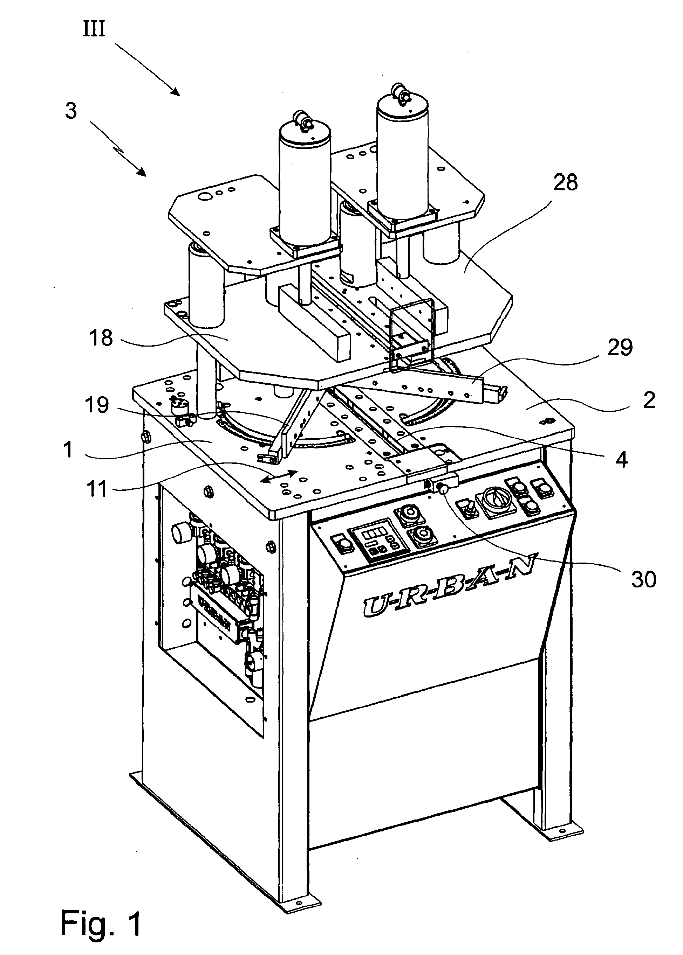

In Fig. 1 ist die erfindungsgemäße Vorrichtung 3 schematisch dargestellt. Das hier gezeigte Ausführungsbeispiel zeigt nur eine Variante der erfindungsgemäßen Vorrichtung beziehungsweise der erfindungsgemäßen Rahmenschweißmaschine, die Erfindung ist natürlich auch in komplexeren Anlagen und Maschinen realisierbar. Die zu verschweißenden Profilstäbe werden auf einem ersten Tisch 1 und einem zweiten Tisch 2 aufgelegt. Üblicherweise werden die Stäbe winklig miteinander verschweißt, hierfür dienen Anschlaglineale 19 und 29, die an einem gemeinsamen Drehpunkt verschwenkbar sind und auf das gewünschte Eckmaß festlegbar sind. Oberhalb der Tische 1, 2 ist je eine Fixiervorrichtung 18, 28 vorgesehen, um die hier nicht gezeigten Profilstäbe auf den Tischen 1, 2 festzuhalten.

In dem hier gezeigten Ausführungsbeispiel ist der zweite Tisch 2 (im Bild rechts angeordnet) feststehend ausgebildet, der linke erste Tisch 1 ist entlang einer durch einen Doppelpfeil 11 angedeuteten Bewegung schlittenartig auf eine Führung beweglich gelagert. Für die Bewegung des ersten Tisches 1 sind entsprechende Antriebe, wie zum Beispiel pneumatisch oder hydraulisch betriebene Arbeitszylinder oder Elektromotoren vorgesehen.

Aus der Zeichnung ergibt sich, dass mit der erfindungsgemäßen Vorrichtung ein rechtwinkliger Rahmen zusammenzuschweißen ist. Auf eine solche Ausgestaltung der damit hergestellten Rahmen beziehungsweise Rahmenteile ist die Erfindung aber nicht beschränkt. In gleicher Weise ist es möglich, rechtwinklig abgeschnittene Profilstäbe aneinanderstoßend bei größeren Profilen zu verschweißen oder aber runde, gebogene beziehungsweise sonstwie winklig aneinanderstoßende Profile mit der erfindungsgemäßen Vorrichtung zu verschweißen.

Zwischen den beiden Tischen 1, 2 ist ein Spalt 4 vorgesehen. Die Breite des Spaltes 4 ist abhängig von der Stellung des beweglichen ersten Tisches 1.

Es wurde bereits darauf hingewiesen, dass die Erfindung natürlich auch Varianten umfasst, bei welchen auch der rechte zweite Tisch 2 beweglich ausgebildet ist. Nachfolgend wird aber nur die Erfindung mit Hilfe des hier dargestellten Beispieles, bei welchem der linke erste Tisch beweglich ausgebildet ist, beschrieben. Dieses Beispiel zeigt eine mögliche Variante der Erfindung.

Die resultierende Spaltbreite ist letztendlich abhängig davon, wann entsprechende Anschläge 12, 50 mit dem Tisch 1, 2 zusammenwirken.

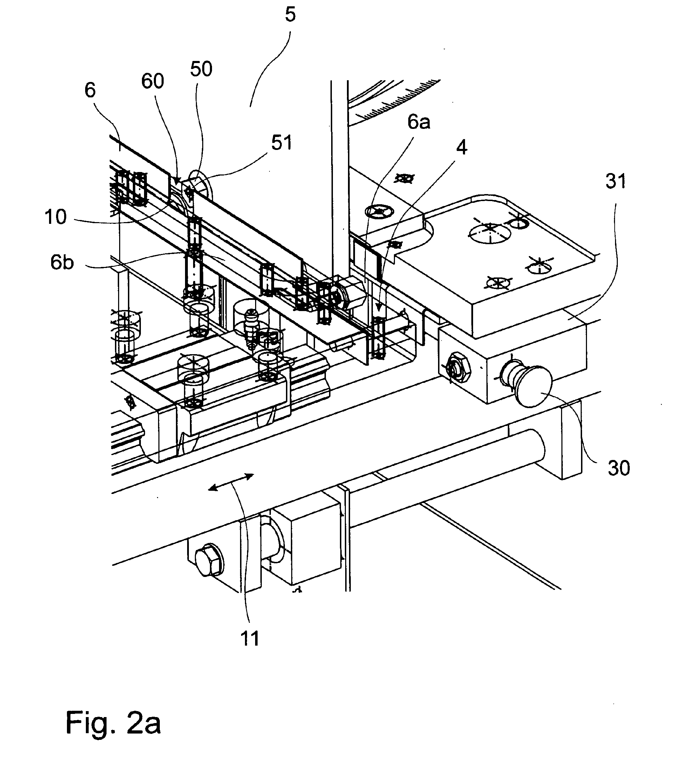

Eine erste solche Situation ist in Fig. 2a gezeigt. In dem Spalt 4 ist hier ein Element 5 eingesteckt oder eingefahren, dies kann zum Beispiel eine Justierplatte oder ein Schweißspiegel, der beheizbar ist, sein. Geschickterweise taucht dieses Element 5 aus einer Ebene unterhalb der Tische 1, 2, vertikal verschiebbar von unten nach oben auf oder wird von hinten nach vorne eingeschoben.

Das Element 5 besitzt einen Anschlag 50. Bewegt sich nun der erste Tisch 1 von links nach rechts, so wird diese Bewegung dann enden, wenn die Anschlagfläche 10 an der Anschlagkopffläche 51 des ersten Tisches 1 anliegt.

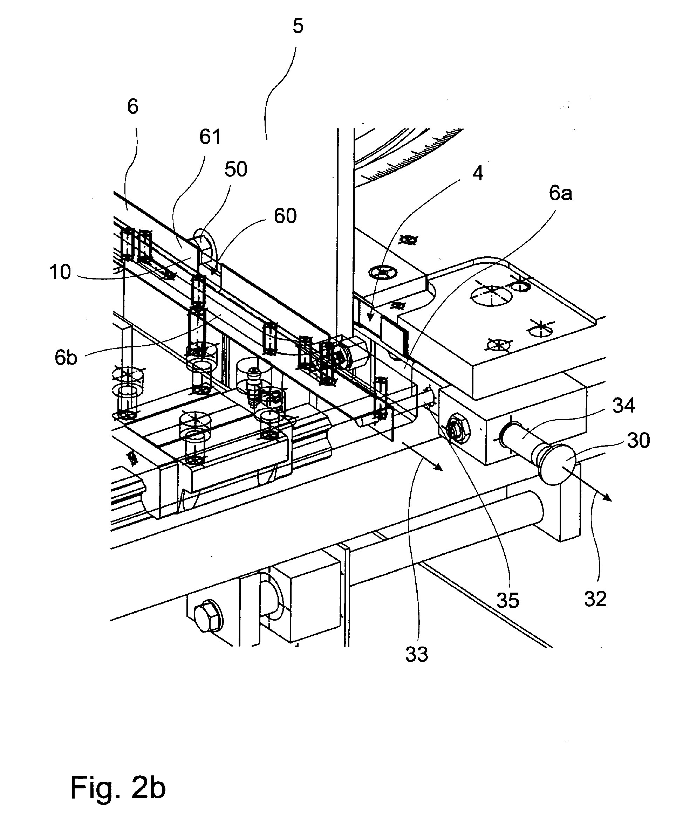

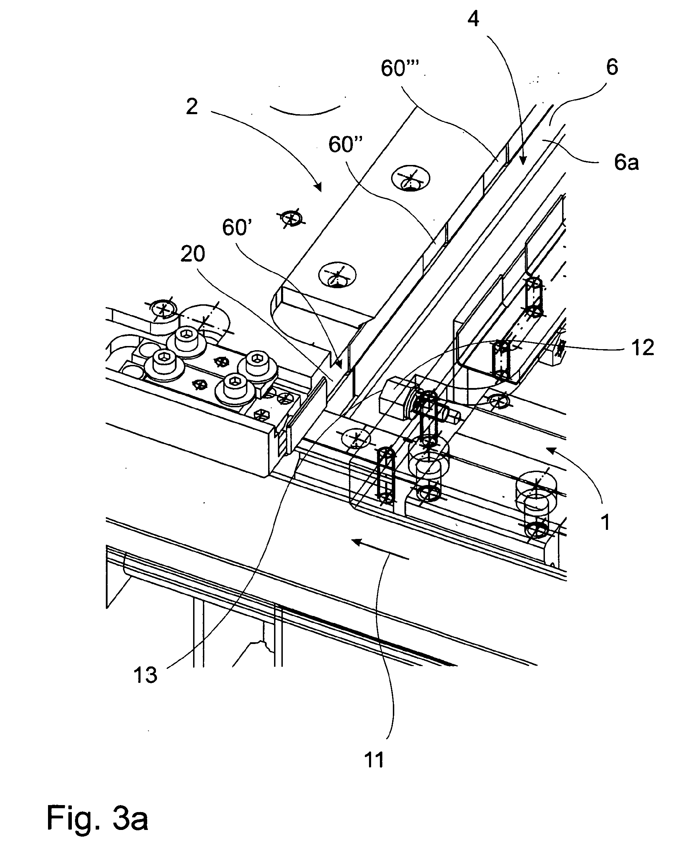

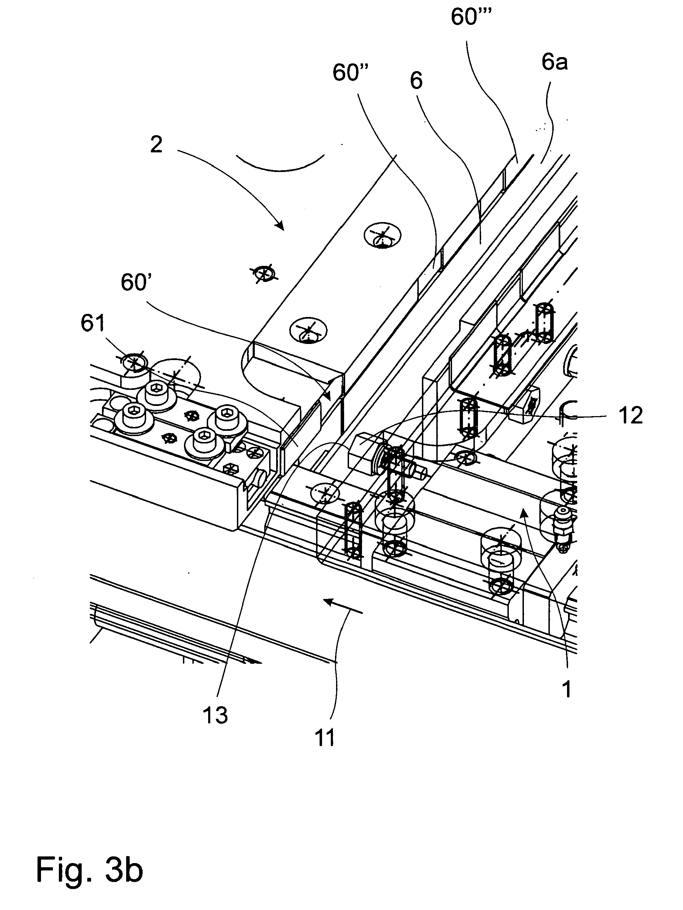

Hierbei sei darauf hingewiesen, dass in den Fig. 2a, 2b, 3a und 3b die Auflageflächen des ersten Tisches 1 beziehungsweise zweiten Tisches 2 zur höheren Übersichtlichkeit nicht dargestellt sind. Der konstruktive Zusammenhang ergibt sich dadurch, dass die Abdeckplatten, wie sie in Fig. 1 auf dem ersten Tisch 1 oder zweiten Tisch 2 gezeigt sind, in den Fig. 2a, 2b, 3a, 3b abgenommen ist.

Erfindungsgemäß wird ein Anschlagelement 6 vorgesehen, da es sich in dem hier gezeigten Ausführungsbeispielen in zwei Anschlagteile 6a und 6b unterteilt.

Dabei ist das erste Anschlagteil 6b dem linken, ersten Tisch 1 zugeordnet, das andere, zweite Anschlagteil 6a ist dem hier feststehenden zweiten Tisch 2 zugeordnet und teilweise durch das Element 5 verdeckt. In dem hier gezeigten Ausführungsbeispiel ist gut zu erkennen, dass die als Lücke ausgeführte Ausnehmung 60 des Anschlagelementes 6 beziehungsweise des ersten Anschlagteiles 6b gerade in dem Bereich angeordnet ist, in welchem der Anschlag 50 bei entsprechender Bewegung des Tisches 1 nach rechts (Doppelpfeil 11) mit der Anschlagfläche 10 zusammenwirken wird.

Wenn die Anschlagkopffläche 51 auf der Anschlagfläche 10 aufliegt, endet die Anstellbewegung des ersten Tisches 1 in Richtung des zweiten Tisches 2.

In Fig. 2a ist die erste Position gezeigt, in welcher die Ausnehmung 60 zwischen Anschlag 50 und Anschlagfläche 10 positioniert ist.

In Fig. 2b ist die zweite Position gezeigt, die das gleiche Detail betrifft. Gegenüber Fig. 2a ist hier nun die Stellung des Betätigungsknopfes 30 verändert. Er wurde in Richtung 32 nach vorne herausgezogen. Hierzu ist der Betätigungsknopf 30 mit einem entsprechenden Antriebsgestänge 34, welches in dem Halter 31 geführt ist, verbunden. Das Antriebsgestänge 34 wirkt dabei sowohl auf das am zweiten Tisch 2 angeordnete zweite Anschlagteil 6a, wie auch über den Querbolzen 35 auf den linken ersten Anschlagteil 6b.

Durch die Bewegung des Betätigungsknopfes 30 entlang des Pfeiles 32 nach vorne, wird somit auch das gesamte Anschlagelement 6 in Richtung des Pfeiles 33 und somit auch der Anschlagteil 6b nach vorne bewegt. Die Bewegung des Betätigungsknopfes 30 entlang des Pfeiles 32 und die resultierende Bewegung des Anschlagelementes 6 sind dabei parallel, erfindungsgemäß können diese Richtungskomponenten aber auch spitzwinklig zueinander verlaufen. Beide Lösungen gehören zur Erfindung.

Das resultierende Ereignis ergibt sich wiederum im Bereich der Ausnehmung 60 an dem Anschlagelement 6. Auch die Ausnehmung 60 ist in Richtung des Pfeiles 33 in einer geradlinigen Bewegung nach vorne gerutscht, derart, dass der neben der Ausnehmung 60 liegende Anschlagbereich 61 jetzt zwischen dem Anschlag 50 und der Anschlagfläche 10 liegt. Dies ist die zweite Position des Anschlagelementes 6.

Die Erfindung erlaubt dabei natürlich auch mehrere Positionen, wobei der Anschlagbereich 61 gegebenenfalls alternativ auch beidseitig neben der Ausnehmung 60 angeordnet werden kann.

Die Verwendung einer Bolzenführung 35 als Teil des Antriebsgestänges 34 erlaubt es, dass das Anschlagteil 6b auf diesem Bolzen 35 längsverschieblich gelagert ist und so auch das Anschlagteil 6b die Bewegung des ersten Tisches 1 mit ausführen kann.

In Fig. 3a beziehungsweise 3b ist eine andere Situation der erfindungsgemäßen Vorrichtung schematisch dargestellt. In Bezug auf Fig. 1 ist hier eine Rückansicht gezeigt, diese ist mit III in Fig. 1 gekennzeichnet. Der bewegliche erste Tisch 1 befindet sich hier rechts.

Erfindungsgemäß ist vorgesehen, dass der Anschlag 12, 50 sowohl an dem in den Spalt 4 einführbaren Element 5, als auch an dem zweiten Tisch 2 (feststehend oder bewegt) angeordnet ist. Letztere Situation ist in Fig. 3a, 3b gezeigt. Hierbei korrespondiert Fig. 3a mit der Stellung nach Fig. 2a, bei welcher also der Betätigungsknopf 30 noch nicht eingesetzt wurde. Fährt nun der erste Tisch 1, der wiederum zur Erhöhung der Übersichtlichkeit nicht vollständig dargestellt ist, entlang des Doppelpfeiles 11 von rechts nach links, so wird diese Bewegung dann geändert, wenn die vordere Anschlagkopffläche 13 auf die Anschlagfläche 20 des zweiten Tisches 2 anliegt. Der Bewegungsweg des ersten Tisches 1 wird nicht begrenzt, es resultiert eine geringe Spaltbreite des Spaltes 4.

In Fig. 3b ist die Situation gezeigt, wenn der Betätigungsknopf 32 gezogen ist, wodurch das Anschlagelement 6 in Richtung des Pfeiles 33 nach rechts oben versetzt wird. Die Ausnehmung 60' wandert in gleicher Weise ebenfalls nach oben rechts und der links davon vorgesehene Anschlagbereich 61 wird mit der Anschlagkopffläche 13 des Anschlages 12 zusammenwirken, wenn der erste Tisch 1 nach links verschoben ist.

Bemerkenswert ist dabei, dass an dem ersten Tisch 1 sowohl eine mit einem Anschlag zusammenwirkende Anschlagfläche 10, wie auch ein Anschlag 12 vorgesehen ist. Es ist klar, dass das Anschlagelement 6 in zwei Anschlagteile 6a und 6b aufgeteilt ist, die jeweils an den jeweiligen Tischen angeordnet sind, ein Element 5 in geeigneter Weise im Spalt genau mittig positionierbar ist, wobei der jeweilige Abstand durch die symmetrische Anordnung der Teile, entsprechend der Stellung des Betätigungsknopfes 30, gleich ist.

In Fig. 3a ist des Weiteren gut zu erkennen, dass das Anschlagelement 6 eine Mehrzahl von Ausnehmungen 60', 60'', 60''' besitzt, die in geeigneter Weise mit Anschlägen zusammenwirken. Besteht das Anschlagelement, wie hier gezeigt, aus mehreren Anschlagteilen 6a, 6b, so besitzen gegebenenfalls beide Anschlagteile 6a, 6b mehrere Ausnehmungen 60, 60', 60'', 60'''. Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Vorrichtung für das Verschweißen von Kunststoffprofilstäben, zum Beispiel zu Tür- oder Fensterrahmen oder deren Teile, wobei je ein Tisch für die zu verschweißenden Profilstäbe vorgesehen ist, die Tische zueinander bewegbar sind und der Bewegungsweg der Tische aufeinanderzu durch einen Anschlag begrenzbar ist, der mit einer Anschlagfläche zusammenwirkt, die an einem ersten Tisch angeordnet ist, **dadurch gekennzeichnet, dass** ein Anschlagelement (6) vorgesehen ist, das zumindest eine Ausnehmung (60) aufweist, an welcher sich ein Anschlagbereich (61) anschließt und das Anschlagelement (6) zumindest in zwei Positionen derart positionierbar ist, dass in einer ersten Position die Ausnehmung (60) zwischen Anschlag (12, 50) und Anschlagfläche (10, 20) positionierbar ist und in einer zweiten Position der Anschlagbereich (61) zwischen Anschlag (12, 50) und Anschlagfläche (10, 20) positionierbar ist.

2. Vorrichtung nach Anspruch 1, **dadurch gekennzeichnet, dass** der Anschlag am zweiten Tisch vorgesehen ist.

3. Vorrichtung nach einem oder beiden der vorhergehenden Ansprüche, **dadurch gekennzeichnet, dass** einer der beiden Tische (1) beziehungsweise beide Tische beweglich gelagert ist/sind und/oder der Anschlag (12) oder die Anschlagfläche (10, 20) an einem beweglichen Tisch angeordnet ist und/oder der Anschlag (50) an einem in dem Spalt (4) zwischen den beiden Tischen (1, 2) anordenbaren Element (5), zum Beispiel einer Justierplatte oder einem Schweißspiegel vorgesehen ist.

4. Vorrichtung nach einem oder mehreren der vorhergehenden Ansprüche, **dadurch gekennzeichnet, dass** entlang der Tiefe des Tisches (1, 2) eine Mehrzahl von Anschlägen (12) vorgesehen sind und/oder der Anschlag (12) eine Anschlagkopffläche (13) aufweist und eine Einstellvorrichtung für die Lage der Anschlagkopffläche (13) vorgesehen ist und/oder das Anschlagelement (6) im Spalt (4) zwischen den beiden Tischen (1, 2) angeordnet ist.

5. Vorrichtung nach einem oder mehreren der vorhergehenden Ansprüche, **dadurch gekennzeichnet, dass** das Anschlagelement (6) längserstreckend im Spalt (4) angeordnet ist und/oder das Anschlagelement (6) als Anschlagleiste ausgebildet ist und/oder das Anschlagelement (6) als Anschlagscheibe ausgebildet ist.

6. Vorrichtung nach einem oder mehreren der vorhergehenden Ansprüche, **dadurch gekennzeichnet, dass** das Anschlagelement (6) aus mehreren Anschlagteilen (6a, 6b) besteht, wobei ein erstes Anschlagteil (6b) dem ersten und ein zweites Anschlagteil (6a) dem zweiten Tisch (2) zugeordnet ist.

7. Vorrichtung nach einem oder mehreren der vorhergehenden Ansprüche, **dadurch gekennzeichnet, dass** die Anschlagleiste im Spalt (4) angeordnet ist und/oder das Anschlagelement (6) als installierte Einheit an der Vorrichtung vorgesehen ist.

8. Vorrichtung nach einem oder mehreren der vorhergehenden Ansprüche, **gekennzeichnet durch** eine geradlinige Bewegung (33) des Anschlagelements (6) zwischen den beiden Positionen und/oder eine Rotationsbewegung des Anschlagelements (6) zwischen den beiden Positionen und/oder einen händischen oder motorischen Bewegungsantrieb für die Bewegung des Anschlagelements (6) zwischen seinen Positionen.

9. Vorrichtung nach einem oder mehreren der vorhergehenden Ansprüche, **dadurch gekennzeichnet, dass** ein Betätigungsknopf (30) mit einem Antriebsgestänge (34, 35) oder Antriebsgetriebe vorgesehen ist und/oder das Antriebsgestänge (34, 35) oder Antriebsgetriebe die Bewegung des Bewegungsantriebes auf die verschiedenen Anschlagteile (6a, 6b) verteilt.

10. Vorrichtung nach einem oder mehreren der vorhergehenden Ansprüche, **dadurch gekennzeichnet, dass** der Bewegungsantrieb, insbesondere der Betätigungsknopf (30) an dem feststehenden Tisch (2) oder den die Vorrichtung tragenden Maschinenrahmen vorgesehen ist.

11. Vorrichtung nach einem oder mehreren der vorhergehenden Ansprüche, **dadurch gekennzeichnet, dass** die Ausnehmung (60) als Lücke in dem Anschlagelement (6) ausgebildet ist.

12. Vorrichtung nach einem oder mehreren der vorhergehenden Ansprüche, **dadurch gekennzeichnet, dass** die Ausnehmung (60) als Materialschwächung in dem Anschlagelement (6) ausgebildet ist.

13. Vorrichtung nach einem oder mehreren der vorhergehenden Ansprüche, **dadurch gekennzeichnet, dass** die Ausnehmung (60) im Rand- oder Endbereich des Anschlagelementes (6) angeordnet ist.

14. Vorrichtung nach einem oder mehreren der vorhergehenden Ansprüche, **dadurch gekennzeichnet, dass** das Anschlagelement (6) eine Mehrzahl von Ausnehmungen (60, 60', 60'', 60''') aufweist.

15. Rahmenschweißmaschine für das Verschweißen von zwei, bevorzugt winklig zueinander angeordneten beziehungsweise zu verschweißenden Profilstäben oder aus Profilstäben gebildeten Rahmenteilen, mit einer Vorrichtung nach einem oder mehreren der vorhergehenden Ansprüche.
